# EUROPEAN PATENT SPECIFICATION

(11) **EP 2 282 372 B1**
(45) Date of publication and mention of the grant of the patent: **11.09.2019**
(21) Application number: 09754726.9
(22) Date of filing: 27.05.2009
(51) Int. Cl.: H01Q 1/50, G06K 19/07, G06K 19/077, H01Q 1/38, H01Q 1/40, H01Q 7/00, H01Q 23/00, H01Q 1/22

(54) **WIRELESS IC DEVICE AND COMPONENT FOR A WIRELESS IC DEVICE**
DRAHTLOSE IC-VORRICHTUNG UND BAUTEIL FÜR DRAHTLOSE IC-VORRICHTUNG
DISPOSITIF À CIRCUIT INTÉGRÉ SANS FIL ET COMPOSANT POUR DISPOSITIF À CIRCUIT INTÉGRÉ SANS FIL

(30) Priority: 28.05.2008 JP 2008139717
(43) Date of publication of application: 09.02.2011
(60) Divisional application: 19159091.8
(73) Proprietor: Murata Manufacturing Co. Ltd., Nagaokakyo-shi, Kyoto 617-8555 (JP)
(72) Inventor: KATO, Noboru, Nagaokakyo-shi Kyoto 617-8555 (JP); SASAKI, Jun, Nagaokakyo-shi Kyoto 617-8555 (JP)
(74) Representative: Zimmermann, Tankred Klaus
(86) International application number: PCT/JP2009/059669
(87) International publication number: WO 2009/145218

(56) References cited:
- EP-A2- 1 884 889
- WO-A1-2007/083575
- WO-A1-2007/125752
- JP-A- 10 069 533
- JP-A- 2000 137 779
- JP-A- 2007 150 642
- JP-A- 2009 027 291
- US-A1- 2006 049 995
- US-B1- 6 249 258

## Description

### Technical Field

The present invention relates to a component of a wireless IC device having a wireless IC for use with a wireless IC device, in particular, for use with an RFID (Radio Frequency Identification) system, and to the wireless IC device.

### Background Art

In recent years, as an article management system, an RFID system has been developed in which communication is performed between a reader/writer that generates an induced electromagnetic field and an IC chip (also referred to as an IC tag, a wireless tag, or a wireless IC chip) with a noncontact method so that information is transferred, the IC chip having predetermined information stored therein and being provided in an article, a container, or the like. It becomes possible for an IC chip, as a result of being connected to an antenna, that is, a radiation plate, to communicate with a reader/writer. As a wireless tag having an IC chip incorporated therein, a wireless tag disclosed in Patent Document 1 is hitherto known.

This wireless tag is constituted by an IC chip, a main antenna element formed to the left and right thereof, a matching unit formed between the IC chip and the main antenna element, and an auxiliary antenna element arranged in proximity to the inner side end surface of the main antenna element. In such a wireless tag, the matching unit allows the impedance of the IC chip to match that of the main antenna element, and transmission and reception of a signal is performed by the main antenna element, thereby functioning as a wireless tag.

However, in the wireless tag, since the matching units arranged in the right and left of the IC chip are formed in a plane form on a dielectric substrate, an electromagnetic field generated in the matching units extends outside the dielectric substrate. For this reason, in a case where the wireless tag is laminated on an article or the like, the dielectric constant in the vicinity of the matching units is changed, thereby causing the inductance value and the capacitance value of the matching units to be changed, and the matching state between the IC chip and the main antenna element is changed. As described above, if the matching state between the IC chip and the main antenna element is changed, desired radiation characteristics are not obtained in the main antenna element, and a communication problem occurs with the reader/writer that performs wireless communication with the wireless tag, presenting the problem in that the operation of the wireless tag becomes unstable.

Furthermore, in the wireless tag, another problem is that since matching units are arranged to the left and right of the IC chip arranged on a dielectric substrate, the wireless tag becomes large.

Furthermore, in the wireless tag, since an IC chip is arranged in such a manner as to be viewable externally on a dielectric substrate, after a wireless tag is laminated on an article or the like, there is a possibility that the IC chip contacts another article when the article is moved or carried, presenting another problem in that the IC chip may become damaged or may detach from the dielectric substrate due to impact at the contact time, or the like, and thus the wireless tag does not operate as a wireless tag. Furthermore, another problem is that in a case where the IC chip is exposed to the outside, corrosion due to temperature and humidity in the periphery of the wireless tag, or the like occurs, and environment resistance performance is poor.

EP 1 884 889 A2 discloses a semiconductor device with a semiconductor chip and a body structure formed by a multilayer formed by ceramic paste with barium titanate, strontium titanate, or perovskite.

JP 2007-150642 discloses a miniaturized antenna for a wireless tag.

US 2006/0049995 A1 discloses an integrated antenna type circuit apparatus.

WO 2007/125752 A1 discloses an article provided with a feed circuit board.

US 6,249,258 B1 discloses a transponder arrangement disposed on a conductive surface.

Patent Document 1: Japanese Unexamined Patent Application Publication No. 2005-244778
Publication No. 2005-244778

### Problems to be Solved by the Invention

Accordingly, an object of the present invention is to provide a small and low-profile component of a wireless IC device capable of stably operating due to improved mechanical strength and environment resistance performance without changing the impedance matching state between the wireless IC and a radiation plate, and a wireless IC device. Means for Solving the Problems

In order to achieve the above-described object, a component of a wireless IC device according to a first aspect of the present invention as defined in claim 1 is proposed.

In the component of a wireless IC device, the wireless IC chip is incorporated on a feeding circuit substrate having a feeding circuit. With such a configuration, the mechanical strength of the component of a wireless IC device can be increased, making it possible to allow the component of a wireless IC device to stably operate. Furthermore, by forming the feeding circuit substrate by a multilayered substrate using a resin, the component of a wireless IC device can be decreased in area and height. Furthermore, since the feeding circuit including a matching circuit is formed on a feeding circuit substrate that is a multilayered substrate, the component is negligibly affected by an article or the like arranged close to the periphery of the substrate, and a change in the impedance matching state can be suppressed.

A wireless IC device according to a second aspect of the present invention further includes a radiation plate that is electromagnetically coupled to a feeding circuit.

Preferably, the feeding circuit substrate includes one main surface and another main surface, and the feeding circuit is arranged between the wireless IC and the one main surface in the lamination direction of resin layers and between the wireless IC and the other main surface. With such a configuration, it is possible to allow the wireless IC device to operate as a wireless IC device having desired characteristics. Furthermore, the arrangement area of the feeding circuit can be increased, and the degree of freedom of the design of the circuit scale and the arrangement position can be improved.

A stress alleviating electrode for alleviating a stress on the wireless IC may be arranged directly above and/or directly below the wireless IC. By arranging an electrode directly above or directly below the wireless IC, in a case where a stress, such as that caused by an impact, is added to the feeding circuit substrate, the stress is alleviated by the electrode, making it possible to reduce the stress on the wireless IC. As a result, the mechanical strength of the wireless IC device can be increased.

Preferably, the inductance element is formed by at least one annular electrode formed in an annular shape by a viahole conductor formed in the feeding circuit substrate and the plurality of electrodes, and the winding axis of the annular electrode is perpendicular to the lamination direction. With such a configuration, a magnetic field is generated on the inner side of the annular electrode and in a direction perpendicular to the lamination direction of the feeding circuit substrate. As a result, when the feeding circuit substrate is arranged in proximity to an article by using the other main surface of the feeding circuit substrate as a mounting surface, a magnetic field is generated in parallel with the mounting surface. Therefore, the electromagnetic field generated by the feeding circuit is negligibly affected by the article, and stabilized communication characteristics can be obtained. Furthermore, since a viahole conductor inside the feeding circuit substrate is used as a portion of the inductance element, the Q value of the inductance element can be increased. Thus, it is possible to configure a feeding circuit having satisfactory electric characteristics.

Preferably, when the annular electrode is viewed from a direction perpendicular to the lamination direction, the wireless IC is arranged on the inner side of the annular electrode and a portion of the annular electrode is arranged in proximity to the radiation plate. With such a configuration, by using the entire feeding circuit substrate, the feeding circuit can be configured, and the degree of freedom of the design of the feeding circuit can be increased. Furthermore, since the feeding circuit can be arranged in proximity to the main surface to be coupled to the radiation plate, it is possible to increase the coupling between the feeding circuit and the radiation plate, and radiation characteristics of the signal in the radiation plate can be improved.

The feeding circuit may include capacitance elements arranged in such a manner that the plurality of electrodes oppose one another, and the plurality of electrodes forming the capacitance elements may serve also as the stress alleviating electrodes. As a result of the electrodes forming the capacitance elements being arranged in a direction perpendicular to the lamination direction of the feeding circuit substrate, the direction of the magnetic field generated in the annular electrode forming the inductance element becomes parallel to the extension direction of the electrodes. As a result, the magnetic field generated in the inductance element is not disturbed by the electrode forming the capacitance element, desired design values can be obtained, and a feeding circuit having predetermined resonance characteristics and matching characteristics can be obtained. Furthermore, the electrode forming the capacitance element may serve as an electrode for alleviating a stress, the electrode being arranged directly above and/or directly below the wireless IC. With such a configuration, it is possible to decrease the number of electrode layers inside the feeding circuit substrate, and the wireless IC device can be decreased in area and height.

Preferably, the feeding circuit substrate includes a flexible portion and a rigid portion, and the wireless IC is arranged in the rigid portion. Since the feeding circuit substrate is formed using a plurality of resin layers, basically, the feeding circuit substrate is flexible. However, if the feeding circuit substrate is partially made rigid and a wireless IC is arranged in the rigid portion, it is possible to reduce the stress on the wireless IC. The portion in which the annular electrode and the stress alleviating electrode are formed becomes a rigid portion in which bending is suppressed. In particular, if the annular electrode is formed using a copper foil, it is possible to make the inner side portion of the annular electrode rigid.

Preferably, a frequency of a signal that is transmitted and received in the radiation plate is substantially determined in accordance with a resonance frequency of the feeding circuit. As described above, by substantially determining the frequency of the signal to be used for communication on the basis of the resonance frequency in the feeding circuit, even if the shape or the material of an article in which the radiation plate and the wireless IC device are mounted is changed, the frequency of the signal that is transmitted and received by the radiation plate is negligibly changed. For this reason, even if the wireless IC device is laminated on various articles or even if an article in which the wireless IC device is laminated is deformed, a malfunction does not occur, and the operation of the wireless IC device can be stabilized.

### Advantages

According to the present invention, as for the feeding circuit substrate, since a multilayered substrate is formed by laminating a plurality of resin layers and a plurality of electrodes, the component of a wireless IC device and the wireless IC device can be decreased in area and height. Furthermore, by incorporating the wireless IC chip in the feeding circuit substrate, the wireless IC chip can be protected. Thus, a component of a wireless IC device and a wireless IC device having improved mechanical strength and environment resistance performance can be provided.

### Brief Description of Drawings

Fig. 1 is a perspective view showing a component of a wireless IC device according to an embodiment of the present invention.
Fig. 2 is an exploded perspective view showing the component of a wireless IC device.
Fig. 3 is a perspective view showing a wireless IC chip.
Fig. 4 is a perspective view showing a wireless IC device including the component of a wireless IC device according to the embodiment.
Fig. 5 is an equivalent circuit diagram of the wireless IC device.
Fig. 6 is an exploded perspective view showing a component of a wireless IC device according to a first example of the present invention.
Fig. 7 is an equivalent circuit diagram of the wireless IC device including the component of a wireless IC device according to the first example.
Fig. 8 is an exploded perspective view showing a component of a wireless IC device according to a second example of the present invention.
Fig. 9 is an equivalent circuit diagram of a wireless IC device including the component of a wireless IC device according to the second example.

Embodiments and examples of a component of a wireless IC device and the wireless IC device according to the present invention will be described below with reference to the attached drawings. In the figures, common parts and portions are designated with the same reference numerals, and duplicated descriptions thereof are omitted.

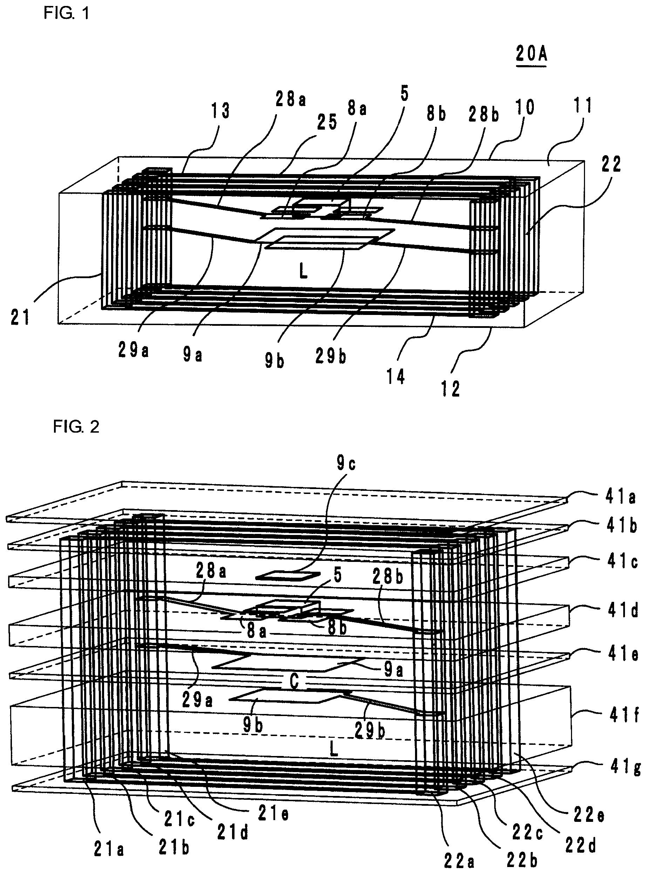

### (Embodiment, see Figs. 1 to 5)

Figs. 1 and 2 show a component 20A of a wireless IC device according to an embodiment of the present invention. Fig. 1 is a perspective view showing the internal structure of the component 20A of a wireless IC device. Fig. 2 is an exploded perspective view of explosion for each of resin layers forming the component 20A of a wireless IC device. The component 20A of a wireless IC device is constituted by a wireless IC chip 5 that is a wireless IC for processing a transmission/reception signal of a predetermined frequency, and a feeding circuit substrate 10 having the wireless IC chip 5 incorporated therein.

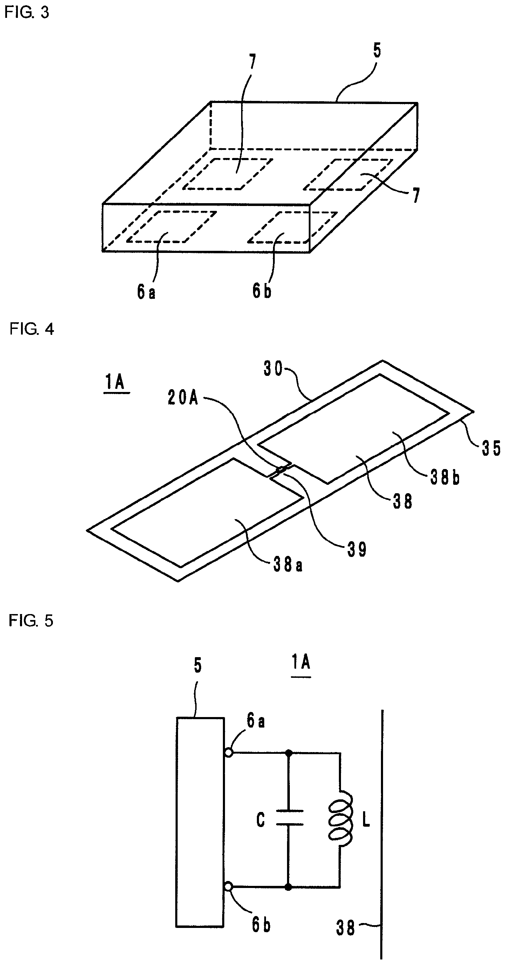

The wireless IC chip 5 includes a clock circuit, a logic circuit, a memory circuit, and the like, and has necessary information stored therein. Fig. 3 is a perspective view showing the wireless IC chip 5, with input-output electrodes 6a and 6b and mounting terminal electrodes 7 and 7 being provided on the reverse surface of the wireless IC chip 5. The input/output electrodes 6a and 6b are electrically connected to electrodes 8a and 8b provided inside the feeding circuit substrate 10 via metal bumps or the like. As materials for the metal bump, Au, a solder, and the like can be used.

On the side of the one main surface 11 of the feeding circuit substrate 10, a plurality of linear electrodes 13 constituted by linearly formed electrodes of Cu or the like are formed side by side so as to be parallel to each other on the one main surface 11. Furthermore, on the side of the other main surface 12 of the feeding circuit substrate 10, a plurality of linear electrodes 14 are formed side by side so as to be parallel to each other on the other main surface 12. Then, a plurality of viahole conductors 21 and 22 that connect the end portions of the linear electrode 13 and the end portions of the linear electrode 14, respectively, are formed inside the feeding circuit substrate 10. As described above, inside the feeding circuit substrate 10, an annular electrode 25 is formed by the linear electrode 13, the linear electrode 14, and the viahole conductors 21 and 22. Then, adjacent annular electrodes are connected to one another in such a manner as to be in a spiral shape when the annular electrode 25 is viewed from a direction perpendicular to the lamination direction of the resin layers of the feeding circuit substrate 10. Then, the annular electrode 25 is connected to the electrodes 8a and 8b via connection electrodes 28a and 28b at predetermined places (the viahole conductors 21 and 22 positioned in both end portions of a coil).

Below the wireless IC chip 5 in the feeding circuit substrate 10, rectangular flat plate electrodes 9a and 9b are arranged so as to oppose the lamination direction in such a manner as for at least portions thereof to overlap each other. Then, the flat plate electrodes 9a and 9b are connected to predetermined places (the viahole conductors 21 and 22 positioned in both end portions of a coil) of the annular electrode 25 via connection electrodes 29a and 29b, respectively. Furthermore, when the annular electrode 25 is viewed from a direction perpendicular to the lamination direction of the feeding circuit substrate 10, the wireless IC chip 5 and the flat plate electrodes 9a and 9b are arranged on the inner side of the annular electrode 25.

Furthermore, as shown in the exploded perspective view of Fig. 2, the feeding circuit substrate 10 is constituted by a plurality of linear electrodes 13 and 14, electrodes 8a and 8b, flat plate electrodes 9a and 9b, and connection electrodes 28a 28b, 29a, and 29b, which are formed on resin layers 41a to 41g, and viahole conductors 21a to 21e, and 22a to 22e formed in such a manner as to go through the resin layers 41b to 41f, respectively. As materials of the resin layers in the component 20A of a wireless IC device in the present embodiment, a liquid-crystal polymer, polyimide, or the like can be used. The plurality of linear electrodes 13 and 14, the electrodes 8a and 8b, the flat plate electrodes 9a and 9b, and the connection electrodes 28a, 28b, 29a, and 29b are formed by etching electrodes of Cu or the like on the resin layers 41a to 41g. Furthermore, the viahole conductors 21a to 21e, and 22a to 22e are formed in such a manner that resin layers are punched using a laser, a mechanical punch, or the like, and a conductive material such as Ag or Cu is filled and cured in the hole. Furthermore, the wireless IC chip 5 is mounted on the electrodes 8a and 8b formed on a predetermined resin layer, and by laminating and crimping the resin layer and the other resin layers, the feeding circuit substrate 10 can be obtained.

The plurality of linear electrodes 13 and 14 may be formed on the same resin layer or may be formed on difference resin layers. By forming the linear electrodes 13 and 14 on difference resin layers, the amount of coupling by the electromagnetic field among the linear electrodes can be adjusted. Furthermore, the linear electrodes 13 and 14 may be formed inside the feeding circuit substrate 10 and also on the one main surface 11 or the other main surface 12.

In the component 20A of a wireless IC device, the annular electrode 25 formed by the linear electrodes 13 and 14 and the viahole conductors 21 and 22 functions as an inductance element L in the feeding circuit. Then, in this inductance element L, since a plurality of annular electrodes 25 are connected in a spiral shape, when the annular electrodes 25 are viewed from a direction perpendicular to the lamination direction, a magnetic field is generated in such a manner as to pass through the inner side of the plurality of annular electrodes. Furthermore, the plurality of annular electrodes 25 are connected to the wireless IC chip 5 via connection electrodes 28a and 28b at predetermined places. For this reason, when viewed from the wireless IC chip 5, as shown in Fig. 5, the annular electrodes 25 are formed in such a manner that the inductance element L is connected to both ends of the wireless IC chip.

Furthermore, below the wireless IC chip 5, opposing flat plate electrodes 9a and 9b are formed, and these constitute a capacitance element C (see Fig. 5). Then, these two flat plate electrodes 9a and 9b are connected in parallel to the annular electrode 25, which is an inductance element L, via connection electrodes 29a and 29b, at predetermined places, thereby forming a resonance circuit or a matching circuit. As in the present embodiment, in the feeding circuit substrate 10, by arranging feeding circuits above and below the wireless IC chip 5, many circuit elements can be arranged inside the feeding circuit substrate 10. Thus, the component 20A of a wireless IC device can be decreased in area and height, and the degree of freedom of the design of the feeding circuit is increased.

As a result of the flat plate electrodes 9a and 9b being arranged below the wireless IC chip 5, these also function as electrodes for alleviating a stress. In the present invention, since the feeding circuit substrate 10 is formed using soft resins, when impact or the like is externally added to the component 20A of a wireless IC device, a warp occurs in the feeding circuit substrate 10. When a stress due to the warp is added to the wireless IC chip 5, since the wireless IC chip is bent or warped, there is a possibility that the wireless IC chip 5 is damaged. Furthermore, even if the wireless IC chip 5 is not damaged, as a result of a warp occurring in the feeding circuit substrate 10, a connection problem occurs between the wireless IC chip 5 and the electrodes 8a and 8b, and a problem may arise in that the component of a wireless IC device does not operate as a component of a wireless IC device. In that case, it is possible for the flat plate electrodes 9a and 9b arranged below the wireless IC chip 5 to alleviate the stress, and suppress the warp to be generated in the feeding circuit substrate 10, so that damage to the wireless IC chip 5 and malfunction thereof due to a connection problem can be prevented. Furthermore, since the flat plate electrodes 9a and 9b are arranged in parallel to the direction of the magnetic field generated in the annular electrode 25, the magnetic field is not disturbed, and predetermined characteristics of the resonance circuit or the matching circuit can be obtained.

In the present embodiment, the two flat plate electrodes 9a and 9b are arranged below the wireless IC chip 5. By arranging the flat plate electrodes 9a and 9b above the wireless IC chip in addition to below the wireless IC chip (see a flat plate electrode 9c in Fig. 2), it is possible to further reduce a stress on the wireless IC chip 5, and the mechanical strength of the component 20A of a wireless IC device can be further increased. Furthermore, the number of the flat plate electrodes 9a and 9b need not to be two, and three or more of them may be arranged to obtain a predetermined capacitance value. Furthermore, the flat plate electrodes 9a and 9b rather than the annular electrodes 25 may be arranged on the other main surface side of the feeding circuit substrate 10. By arranging the flat plate electrodes 9a and 9b on the other main surface of the feeding circuit substrate 10, it is possible to electromagnetically couple the radiation plate and the feeding circuit. As a result, it is possible to adjust the amount of the electromagnetic field coupling between the radiation plate and the feeding circuit, and it is possible to control radiation characteristics of the signal from the radiation plate.

### (Wireless IC device, see Figs. 4 and 5).

An embodiment in which the component 20A of a wireless IC device is combined with a radiation plate 30 so as to form a wireless IC device 1A is shown in Fig. 4. The radiation plate 30 includes a radiation electrode 38 formed on a substrate 35, such as a PET film. The radiation electrode 38 has a coupling unit 39 for coupling with the component 20A of a wireless IC device, with the coupling unit 39 being arranged in the central portion of the radiation electrode 38 in the longitudinal direction thereof. Then, the component 20A of a wireless IC device is laminated and carried on the coupling unit 39 using an adhesive or the like. Furthermore, the radiation electrode 38 is provided on both sides of the component 20A of a wireless IC device when viewed from the component 20A of a wireless IC device and is in a so-called dipole-type shape. Then, the radiation electrode 38 has wide parts 38a and 38b in both end portions, so that radiation characteristics and the directivity are improved.

The feeding circuit and the coupling unit 39 inside the component 20A of a wireless IC device are arranged in such a manner as to be electrically insulated from each other, and the feeding circuit and the coupling unit 39 are electromagnetically coupled to each other by a magnetic field generated in the annular electrode 25 (inductance element L) forming the feeding circuit. The feeding circuit substrate 10 has incorporated therein a resonance circuit (an inductance element L and a capacitance element C) having a predetermined resonance frequency, so that a transmission signal having a predetermined frequency, which is sent from the wireless IC chip 5, is transmitted to the radiation electrode 38, a received signal having a predetermined frequency is selected from the signals received by the radiation electrode 38, and the signal is supplied to the wireless IC chip 5. Therefore, in this wireless IC device 1A, the wireless IC chip 5 is operated in accordance with the signal received by the radiation electrode 38 and a response signal from the wireless IC chip 5 is radiated to the outside from the radiation electrode 38.

An equivalent circuit of the wireless IC device 1A is shown in Fig. 5. As shown in Fig. 5, the feeding circuit substrate 10 includes a feeding circuit having a resonance circuit, and a matching circuit having an inductance element L and a capacitance element C. Furthermore, the inductance element L is magnetically coupled to a corresponding one of the radiation electrodes 38, and this feeding circuit is connected to the wireless IC chip 5.

In the feeding circuit substrate 10, resonance frequency characteristics are determined in the resonance circuit constituted by the inductance element L and the capacitance element C. The resonance frequency of the signal radiated from the radiation electrode 38 is substantially determined by the self-resonance frequency of the resonance circuit.

Incidentally, the resonance circuit may also serve as a matching circuit for causing the impedance of the wireless IC chip 5 to match the impedance of the radiation electrode 38. The feeding circuit substrate 10 may include a matching circuit that is provided separately to the resonance circuit constituted by the inductance element L and the capacitance element C (in this sense, the resonance circuit will also be referred to as a matching circuit). If the function of the matching circuit is added to the resonance circuit, the design of the resonance circuit tends to become complex. If a matching circuit is provided separately to the resonance circuit, the resonance circuit and the matching circuit can be designed independently of each other.

As has been described above, in the present wireless IC device 1A, since the wireless IC chip 5 is incorporated in the feeding circuit substrate 10 formed using resin layers, and feeding circuits can be arranged above and below the wireless IC chip, the degree of freedom of the design of the feeding circuits can be increased, and also the feeding circuit substrate 10 can be decreased in area and height. Furthermore, since the wireless IC chip 5 is incorporated in the feeding circuit substrate 10, the mechanical strength and the environment resistance performance of the wireless IC chip 5 can be increased.

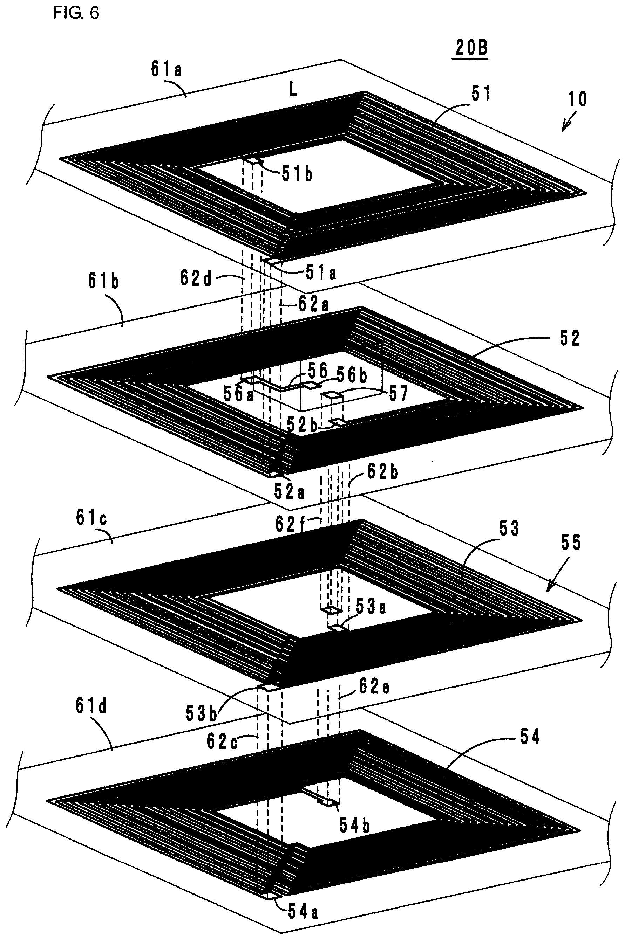

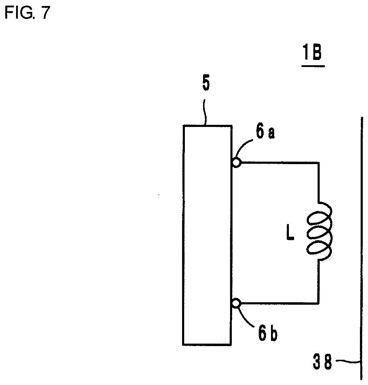

### (First example, see Figs. 6 and 7)

Fig. 6 shows a component 20B of a wireless IC device according to a first example of the present invention. Basically, similarly to the embodiment, the component 20B is configured such that an annular electrode 55 (inductance element L) is formed using spiral electrodes 51, 52, 53, and 54 inside the feeding circuit substrate 10 formed from resin layers, and the wireless IC chip 5 is incorporated therein.

The spiral electrodes 51 to 54 are formed on the resin layers 61a to 61d, an end portion 51a of the spiral electrode 51 is connected to an end portion 52a of the spiral electrode 52 via a viahole conductor 62a, and an end portion 52b of the spiral electrode 52 is connected to an end portion 53a of the spiral electrode 53 via a viahole conductor 62b. Furthermore, an end portion 53b of the spiral electrode 53 is connected to an end portion 54a of the spiral electrode 54 via a viahole conductor 62c.

An end portion 51b of the spiral electrode 51 is connected to an end portion 56a of the linear electrode 56 formed on the resin layer 61b via a viahole conductor 62d, and an end portion 56b of the linear electrode 56 is connected to an input/output electrode 6a (see Fig. 3) of the wireless IC chip 5. On the other hand, an end portion 54b of the spiral electrode 54 is connected to the electrode 57 formed on the resin layer 61b via a viahole conductor 62e, and the electrode 57 is connected to the input/output electrode 6b of the wireless IC chip 5.

In this component 20B of a wireless IC device, as shown in Fig. 7, the annular electrode 55 (inductance element L) formed by the spiral electrodes 51 to 54 is connected in series with the wireless IC chip 5, and the inductance element L is electromagnetically coupled to the radiation electrode 38.

The operational effect of the wireless IC device 1B formed from the above components is the same as that of the embodiment. The wireless IC chip 5 is operated in accordance with a signal received by the radiation electrode 38, and a response signal from the wireless IC chip 5 is radiated to the outside from the radiation electrode 38. In the present feeding circuit substrate 10, the inner side area of the annular electrode 55 is a rigid area. That is, since the feeding circuit substrate 10 is formed using a plurality of resin layers, the feeding circuit substrate 10 is basically flexible. However, since the bending thereof is suppressed by the annular electrode 55 formed from the spiral electrodes 51 to 54, the inner side area of the annular electrode 55 becomes a rigid area. In particular, in the present example, since the spiral electrodes 51 to 54 are wound a plurality of times, the inner side area of the annular electrode 55 becomes more rigid than in the embodiment. Then, since the wireless IC chip 5 is arranged in the rigid area, it is possible to reduce a stress on the wireless IC chip 5. The flat plate electrode 9c for alleviating a stress, shown in Fig. 2, may be formed in the inner side area of the annular electrode 55. As a result, since the rigid area of the inner side area of the annular electrode 55 becomes more rigid, it is possible to reduce the stress on the wireless IC chip 5 even more.

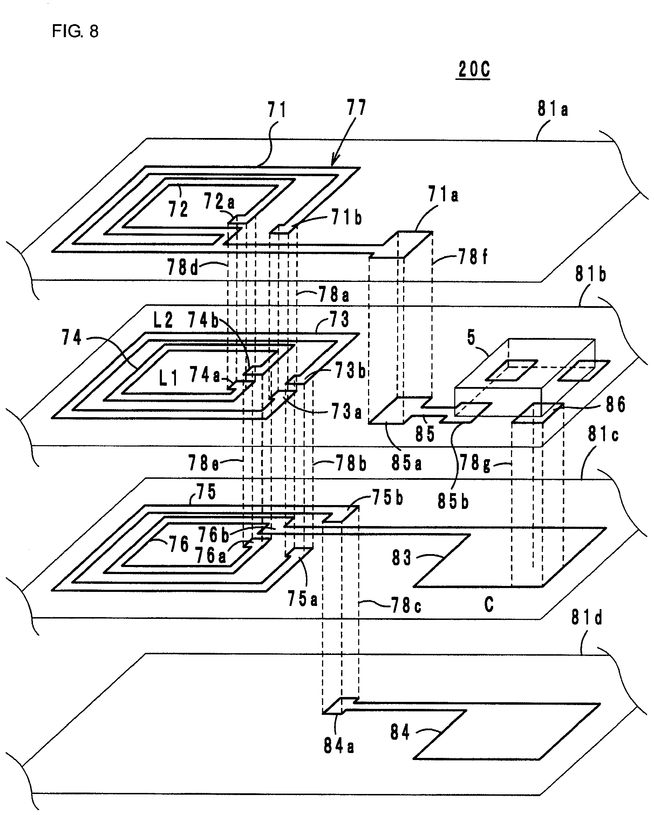

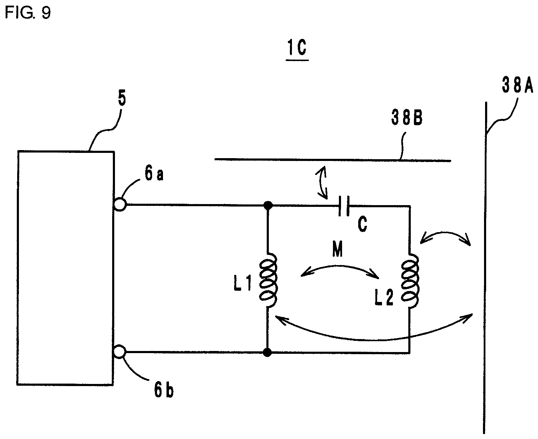

### (Second example, see Figs. 8 and 9)

Fig. 8 shows a component 20C of a wireless IC device according to a second example of the present invention. Basically, similarly to the embodiment, the component 20C is configured such that an annular electrode 77 (inductance elements L1 and L2), and opposing flat plate electrodes 83 and 84 (capacitance elements C) are formed by double linear electrodes 71, 72, 73, 74, 75, and 76 inside the feeding circuit substrate 10 formed from resin layers, and the wireless IC chip 5 is incorporated therein.

The linear electrodes 71 to 76 are formed on resin layers 81a to 81c, an end portion 71b of the linear electrode 71 is connected to an end portion 73a of the linear electrode 73 via a viahole conductor 78a, and an end portion 73b of the linear electrode 73 is connected to an end portion 75a of the linear electrode 75 via a viahole conductor 78b. An end portion 75b of the linear electrode 75 is connected to an end portion 84a of the flat plate electrode 84 formed on the resin layer 81d via a viahole conductor 78c. On the other hand, the linear electrode 72 is made to branch from the linear electrode 71, an end portion 72a is connected to an end portion 74a of the linear electrode 74 via a viahole conductor 78d, and an end portion 74b of the linear electrode 74 is connected to an end portion 76a of the linear electrode 76 via a viahole conductor 78e. Furthermore, an end portion 76b of the linear electrode 76 is connected to the flat plate electrode 83.

An end portion 71a of the linear electrode 71 is connected to an end portion 85a of the electrode 85 formed on the resin layer 81b via a viahole conductor 78f, and an end portion 85b of the electrode 85 is connected to the input/output electrode 6a of the wireless IC chip 5 (see Fig. 3). On the other hand, the flat plate electrode 83 is connected to the electrode 86 formed on the resin layer 81b via a viahole conductor 78g, and the electrode 86 is connected to the input/output electrode 6b of the wireless IC chip 5.

In this component 20C of a wireless IC device, as shown in Fig. 9, inductance elements L1 and L2 are formed by the annular electrode 77 formed from the linear electrodes 71 to 76, with these inductance elements L1 and L2 being magnetically coupled to one another (indicated by mutual inductance M). These inductance elements L1 and L2 and the capacitance element C (flat plate electrodes 83 and 84) that is connected in series with one end of each of the inductance elements L1 and L2 constitute a feeding circuit having a resonance circuit and a matching circuit. Furthermore, the inductance elements L1 and L2 are each magnetically coupled to the radiation electrode 38A, and the capacitance element C is electrically coupled to the radiation electrode 38B.

The operational effect of the wireless IC device 1C formed from the above components is the same as that of the embodiment. The wireless IC chip 5 is operated in accordance with a signal received by the radiation electrodes 38A and 38B, and a response signal from the wireless IC chip 5 is radiated to the outside from the radiation electrodes 38A and 38B. In the present feeding circuit substrate 10, the portion in which the inner side area of the annular electrode 77 and the flat plate electrodes 83 and 84 are formed is a rigid area. Then, since the wireless IC chip 5 is arranged directly above the flat plate electrodes 83 and 84 and is positioned in a rigid area, it is possible to reduce a stress on the wireless IC chip 5.

### Industrial Applicability

As has been described above, the present invention is useful for a component of a wireless IC device and a wireless IC device. In particular, the present invention is superior in that the wireless IC device can stably operate without changing the impedance matching state of a wireless IC and a radiation plate.
1A, 1B, 1C wireless IC device
5 wireless IC chip
6a, 6b input/output electrode
8a, 8b electrode
9a, 9b, 83, 84 flat plate electrode
9c stress alleviating electrode
10 feeding circuit substrate
13, 14, 71 to 76 linear electrode
20A, 20B, 20C component for wireless IC device
21, 22 viahole conductor
25, 55, 77 annular electrode
28, 29 connection electrode
30 radiation plate
38, 38A, 38B radiation electrode
39 coupling unit
51 to 54 spiral electrode
L, L1, L2 inductance element
C capacitance element

## Claims

1. A component (20A, 20B, 20C) of a wireless IC device (1A, 1B, 1C), comprising:
a wireless IC (5); and
a feeding circuit substrate (10) provided with a feeding circuit including a resonance circuit including an inductance element (L, L1, L2, 25) that is electrically-connected to the wireless IC (5),
wherein the feeding circuit substrate (10) is a flexible multilayered substrate formed by laminating a plurality of resin layers (41a-41g, 81a-81c),
the inductance element is formed by a plurality of electrodes (13, 14, 28a, 28b) including viahole conductors (21, 22),
the inductance element is formed of at least one annular electrode (25) formed in an annular shape by using the plurality of viahole conductors (21, 22) and electrodes formed in the feeding circuit substrate (10), and a winding axis of the annular electrode (25) is perpendicular to a lamination direction of the resin layers, the feeding circuit substrate (10) being further **characterized in that**,
the wireless IC is arranged on an inner side of the annular electrode (25) when the annular electrode (25) is viewed from a direction perpendicular to the lamination direction, and
the feeding circuit includes capacitance elements formed by another plurality of electrodes (9a-9c) opposing one another.

2. The component of a wireless IC device according to Claim 1, wherein the feeding circuit substrate (10) includes one main surface (11) and another main surface (12), and the feeding circuit is arranged between the wireless IC (5) and the one main surface (10) in the lamination direction of the resin layers (41a-41g, 81a-81c) and between the wireless IC (5) and the other main surface (12).

3. The component of a wireless IC device according to Claim 1 or 2, wherein a plurality of stress alleviating electrodes (9a-9c) are arranged directly above and/or directly below the wireless IC (5).

4. The component of a wireless IC device according to Claim 3, wherein the capacitance elements formed by the another plurality of electrodes opposing one another are the stress alleviating electrodes.

5. The component of a wireless IC device according to Claim 1 or 2,
wherein the feeding circuit substrate (10) includes a flexible portion and a rigid portion, and
wherein the wireless IC (5) is arranged in the rigid portion.

6. The component of a wireless IC device according to Claim 5, wherein the rigid portion is formed by the annular electrode (25).

7. The component of a wireless IC device according to Claim 5, wherein the rigid portion is formed by stress alleviating electrodes (9a-9c).

8. The component of a wireless IC device according to Claim 3 or 4,
wherein the feeding circuit substrate (10) includes a flexible portion and a rigid portion,
wherein the wireless IC (5) is arranged in the rigid portion, and
wherein the rigid portion is formed by the stress alleviating electrodes (9a-9c).

9. A wireless IC device comprising:
the component of a wireless IC device (1A, 1B, 1C) according to any one of Claims 1 to 8; and
a radiation plate (30) that is electromagnetically coupled to the feeding circuit.

10. The wireless IC device according to Claim 9, wherein a portion of the annular electrode (25) is arranged in proximity to the radiation plate (30).

11. The wireless IC device according to Claim 9 or 10, wherein the coupling between the feeding circuit and the radiation plate (30) is such that a frequency of a signal that is to be transmitted and received in the radiation plate (30) is determined by the self-resonance frequency of the feeding circuit.

## Patentansprüche

1. Eine Komponente (20A, 20B, 20C) eines Drahtlos-IC-Bauelements (1A, 1B, 1C), die folgende Merkmale aufweist:
eine Drahtlos-IC (5); und
ein Versorgungsschaltungssubstrat (10), das mit einer Versorgungsschaltung versehen ist, mit einer Resonanzschaltung mit einem Induktivitätselement (L, L1, L2, 25), das elektrisch mit der Drahtlos-IC (5) verbunden ist,
wobei das Versorgungsschaltungssubstrat (10) ein flexibles mehrschichtiges Substrat ist, das gebildet ist durch Laminieren einer Mehrzahl von Harzschichten (41a-41g, 81a-81c),
das Induktivitätselement gebildet ist durch eine Mehrzahl von Elektroden (13, 14, 28a, 28b), die Durchgangslochleiter (21, 22) beinhalten,
das Induktivitätselement gebildet ist aus zumindest einer ringförmigen Elektrode (25), die in einer Ringform gebildet ist, durch Verwenden der Mehrzahl von Durchgangslochleitern (21, 22) und Elektroden, die in dem Versorgungsschaltungssubstrat (10) gebildet sind, und eine Wickelachse der ringförmigen Elektrode (25) senkrecht zu einer Laminierungsrichtung der Harzschichten ist, wobei das Versorgungsschaltungssubstrat (10) ferner **dadurch gekennzeichnet ist, dass**:
die Drahtlos-IC an einer Innenseite der ringförmigen Elektrode (25) angeordnet ist, wenn die ringförmige Elektrode (25) aus einer Richtung senkrecht zu der Laminierungsrichtung betrachtet wird, und
die Versorgungsschaltung Kapazitätselemente aufweist, die gebildet sind durch eine weitere Mehrzahl von Elektroden (9a-9c), die einander gegenüberliegen.

2. Die Komponente eines Drahtlos-IC-Bauelements gemäß Anspruch 1, bei der das Versorgungsschaltungssubstrat (10) eine Hauptoberfläche (11) und eine weitere Hauptoberfläche (12) aufweist und die Versorgungsschaltung zwischen der Drahtlos-IC (5) und der einen Hauptoberfläche (10) in der Laminierungsrichtung der Harzschichten (41a-41g, 81a-81c) und zwischen der Drahtlos-IC (5) und der anderen Hauptoberfläche (12) angeordnet ist.

3. Die Komponente eines Drahtlos-IC-Bauelements gemäß Anspruch 1 oder 2, bei der eine Mehrzahl von Belastungslinderungselektroden (9a-9c) direkt oberhalb und/oder direkt unterhalb der Drahtlos-IC (5) angeordnet ist.

4. Die Komponente eines Drahtlos-IC-Bauelements gemäß Anspruch 3, bei der die Kapazitätselemente, die durch die weitere Mehrzahl von Elektroden gebildet sind, die einander gegenüberliegen, die Belastungslinderungselektroden sind.

5. Die Komponente eines Drahtlos-IC-Bauelements gemäß Anspruch 1 oder 2,
bei der das Versorgungsschaltungssubstrat (10) einen flexiblen Abschnitt und einen starren Abschnitt aufweist und
bei der die Drahtlos-IC (5) in dem starren Abschnitt angeordnet ist.

6. Die Komponente eines Drahtlos-IC-Bauelements gemäß Anspruch 5, bei der der starre Abschnitt durch die ringförmige Elektrode (5) gebildet ist.

7. Die Komponente eines Drahtlos-IC-Bauelements gemäß Anspruch 5, bei der der starre Abschnitt gebildet ist durch Belastungslinderungselektroden (9a-9c).

8. Die Komponente eines Drahtlos-IC-Bauelements gemäß Anspruch 3 oder 4,
bei der das Versorgungsschaltungssubstrat (10) einen flexiblen Abschnitt und einen starren Abschnitt aufweist,
bei der die Drahtlos-IC (5) in dem starren Abschnitt angeordnet ist und
bei der der starre Abschnitt gebildet ist durch die Belastungslinderungselektroden (9a-9c).

9. Ein Drahtlos-IC-Bauelement, das folgende Merkmale aufweist:
die Komponente eines Drahtlos-IC-Bauelements (1A, 1B, 1C) gemäß einem der Ansprüche 1 bis 8; und
eine Strahlungsplatte (30), die elektromagnetisch mit der Versorgungsschaltung gekoppelt ist.

10. Das Drahtlos-IC-Bauelement gemäß Anspruch 9, bei dem ein Abschnitt der ringförmigen Elektrode (25) in Nähe zu der Strahlungsplatte (30) angeordnet ist.

11. Das Drahtlos-IC-Bauelement gemäß Anspruch 9 oder 10, bei dem die Kopplung zwischen der Versorgungsschaltung und der Strahlungsplatte (30) derart ist, dass eine Frequenz eines Signals, das in der Strahlungsplatte (30) gesendet und empfangen werden soll, durch die Eigenresonanzfrequenz der Versorgungsschaltung bestimmt ist.

## Revendications

1. Composant (20A, 20B, 20C) d'un dispositif à circuit intégré sans fil (1A, 1B, 1C), comprenant :
un circuit intégré sans fil (5) ; et
un substrat de circuit d'alimentation (10) muni d'un circuit d'alimentation incluant un circuit résonnant incluant un élément d'inductance (L, L1, L2, 25) qui est connecté électriquement au circuit intégré sans fil (5) ;
dans lequel le substrat de circuit d'alimentation (10) est un substrat multicouche flexible formé en stratifiant une pluralité de couches de résine (41a-41g, 81a-81c) ;
l'élément d'inductance est formé par une pluralité d'électrodes (13, 14, 28a, 28b) incluant des conducteurs de trou d'interconnexion (21, 22) ;
l'élément d'inductance est formé d'au moins une électrode annulaire (25), formée dans une forme annulaire en utilisant la pluralité de conducteurs de trou d'interconnexion (21, 22), et d'électrodes formées dans le substrat de circuit d'alimentation (10), et un axe d'enroulement de l'électrode annulaire (25) est perpendiculaire à une direction de stratification des couches de résine, le substrat de circuit d'alimentation (10) étant **caractérisé en ce que** :
le circuit intégré sans fil est agencé sur un côté intérieur de l'électrode annulaire (25) lorsque l'électrode annulaire (25) est vue d'une direction perpendiculaire à la direction de stratification ; et
le circuit d'alimentation comprend des éléments capacitifs formés par une autre pluralité d'électrodes (9a-9c) qui se font mutuellement face.

2. Composant d'un dispositif à circuit intégré sans fil selon la revendication 1, dans lequel le substrat de circuit d'alimentation (10) comprend une surface principale (11) et une autre surface principale (12), et le circuit d'alimentation est agencé entre le circuit intégré sans fil (5) et la surface principale (10) dans la direction de stratification des couches de résine (41a-41g, 81a-81c) et entre le circuit intégré sans fil (5) et l'autre surface principale (12).

3. Composant d'un dispositif à circuit intégré sans fil selon la revendication 1 ou 2, dans lequel une pluralité d'électrodes d'atténuation de contraintes (9a-9c) est agencée directement au-dessus et/ou directement au-dessous du circuit intégré sans fil (5).

4. Composant d'un dispositif à circuit intégré sans fil selon la revendication 3, dans lequel les éléments capacitifs formés par ladite une autre pluralité d'électrodes qui se font mutuellement face sont les électrodes d'atténuation de contraintes.

5. Composant d'un dispositif à circuit intégré sans fil selon la revendication 1 ou 2,
dans lequel le substrat de circuit d'alimentation (10) inclut une partie flexible et une partie rigide ; et
dans lequel le circuit intégré sans fil (5) est agencé dans la partie rigide.

6. Composant d'un dispositif à circuit intégré sans fil selon la revendication 5, dans lequel la partie rigide est formée par l'électrode annulaire (25).

7. Composant d'un dispositif à circuit intégré sans fil selon la revendication 5, dans lequel la partie rigide est formée par des électrodes d'atténuation de contraintes (9a-9c).

8. Composant d'un dispositif à circuit intégré sans fil selon la revendication 3 ou 4,
dans lequel le substrat de circuit d'alimentation (10) inclut une partie flexible et une partie rigide ;
dans lequel le circuit intégré sans fil (5) est agencé dans la partie rigide ; et
dans lequel la partie rigide est formée par les électrodes d'atténuation de contraintes (9a-9c).

9. Dispositif à circuit intégré sans fil comprenant :
le composant d'un dispositif à circuit intégré sans fil (1A, 1B, 1C) selon l'une quelconque des revendications 1 à 8 ; et
une plaque de rayonnement (30) qui est couplée électromagnétiquement au circuit d'alimentation.

10. Dispositif à circuit intégré sans fil selon la revendication 9, dans lequel une partie de l'électrode annulaire (25) est agencée à proximité de la plaque de rayonnement (30).

11. Dispositif à circuit intégré sans fil selon la revendication 9 ou 10, dans lequel le couplage entre le circuit d'alimentation et la plaque de rayonnement (30) est tel qu'une fréquence d'un signal qui doit être transmis et reçu dans la plaque de rayonnement (30) est déterminée par la fréquence de résonance propre du circuit d'alimentation.
